# EUROPÄISCHE PATENTSCHRIFT

(11) **EP 2 051 808 B1**
(45) Veröffentlichungstag und Bekanntmachung des Hinweises auf die Patenterteilung: **14.11.2018**
(21) Anmeldenummer: 07788412.0
(22) Anmeldetag: 14.08.2007
(51) Int. Cl.: B01J 35/00

(54) **SELBSTREINIGENDE OBERFLÄCHENBESCHICHTUNG (PHOTOKATALYSE)**
SELF-CLEANING SURFACE COATING (PHOTOCATALYSIS)
REVÊTEMENT DE SURFACE AUTONETTOYANT (PHOTOCATALYSE)

(30) Priorität: 17.08.2006 DE 102006038593
(43) Veröffentlichungstag der Anmeldung: 29.04.2009
(73) Patentinhaber: Siemens Aktiengesellschaft, 80333 München (DE)
(72) Erfinder: KAPITZA, Heinrich, 90765 Fürth (DE); GENSLER, Rudolf, 596288 Singapore (SG); ZEININGER, Heinrich, 90587 Obermichelbach (DE)
(86) Internationale Anmeldenummer: PCT/EP2007/058394
(87) Internationale Veröffentlichungsnummer: WO 2008/020014

(56) Entgegenhaltungen:
- EP-A- 1 291 331
- EP-A- 1 498 176

## Beschreibung

Die Erfindung betrifft eine selbstreinigende Oberflächenbeschichtung, die einfach und kostengünstig herstellbar ist. Der Effekt der Photokatalyse ist lange bekannt und wird insbesondere zur Oxidation und/oder zum Abbau von organischen Verbindungen (z.B. Verschmutzungen) auf Substraten unter Sonnenlicht oder künstlichem Licht eingesetzt. Die gleiche Oxidationsreaktion kann z.B. in der chemischen Industrie und im Bereich der Wasseraufbereitung zur gezielten Oxidation bzw. Degradation von chemischen Verbindungen und Keimen dienen. EP1498176 beschreibt photokatalytisch aktive Beschichtungen.

Photokatalytisch aktive Beschichtungen müssen eine ausreichende mechanische und chemische Stabilität aufweisen. Die sollte nicht zu Lasten der Aktivität der Beschichtung erfolgen; diese muss auch bei geringer Sonneneinstrahlung, z.B. im Winter, eine ausreichend hohe Aktivität aufweisen.
Photokatalytische Beschichtungen sind bereits bekannt. Bei Kunststoffsubstraten bzw. bei lackierten Substraten (z.B. lackierte Bleche) muss jedoch zur Vermeidung einer Oxidation des Untergrundes eine Schutzschicht aufgebracht werden, die anschließend mit der eigentlich photokatalytisch aktiven Schicht überzogen wird. Diese Doppelbeschichtung ist nachteilig in Bezug auf Herstellungskosten und Lebensdauer der Systeme.
Aufgabe der vorliegenden Erfindung ist es daher, eine photokatalytisch aktive Oberflächenbeschichtung zu schaffen, die einfach und preiswert auf Kunststoff oder Kunststoffbeschichtete Oberflächen appliziert werden kann und eine hohe Lebensdauer aufweist.
Gegenstand der Erfindung ist eine photokatalytische Beschichtung, die eine Schicht von Titandioxid-Nanopartikel in einer Kunststoffmatrix umfasst, wobei die Nanopartikel in einem maximalen Teilchendurchmesser von 100 nm vorliegen, die Dicke der Beschichtung kleiner 5 µm beträgt und die Beschichtung transparent ist,
dadurch gekennzeichnet, dass
die Titandioxid-Nanopartikel innerhalb der Beschichtung inhomogen verteilt sind derart, dass sich die Titandioxid-Nanopartikel in hoher Konzentration nur an der Oberfläche der Kunststoffmatrix befinden. Außerdem ist Gegenstand der Erfindung die Verwendung der Beschichtung als selbstreinigende Oberflächenbeschichtung.

Gegenstand der Erfindung ist auch die Herstellung einer photokatalytischen Beschichtung, wobei zunächst zumindest eine Titandioxid-Suspension z.B. über ein nasschemisches Verfahren, auf eine nicht vollständig ausgehärtete Kunststoffoberfläche aufgebracht wird, und danach die beschichtete Kunststoffoberfläche vollständig ausgehärtet wird.

Nasschemische Verfahren sind beispielsweise Dip-coating (Tauchen) Rakeln, Sprühen, Schleudern und/oder Fluten. Alle diese Verfahren können erfindungsgemäß zur Herstellung der photokatalytischen Beschichtung eingesetzt werden.

Nach einer vorteilhaften Ausgestaltung der Erfindung liegen die Titandioxid Nanopartikel in einer Größenordnung (Teilchendurchmesser) von <100nm vor.

Mögliche Kunststoffoberflächen, auf die die Suspension aufgebracht wird, sind beispielsweise Duroplaste, insbesondere Polyurethane, Epoxidharze, Acrylharze, Siliconharze und/oder Siliconlacke, Alkyd-, Phenol-, Melaninharze und/oder -lacke.

Die Oberflächen sind beispielsweise Lacke, mit denen eine Maschine, eine Pumpe, ein Schaufelrad, ein Trichter, etc. überzogen ist oder es sind Lacke, die auf Außenoberflächen aufgetragen sind, schließlich können die möglichen Kunststoffoberflächen auch Duroplast-Folien sein, auf die die selbstreinigende Beschichtung aufgebracht wird.

Nach einer vorteilhaften Ausführungsform der Erfindung wird die transparente selbstreinigende Beschichtung auf einer transparenten Kunststoffoberfläche aufgebracht, so dass eine transparente selbstreinigende Oberflächenbeschichtung resultiert.

Beispielsweise können Folien und/oder Gläser, anorganische oder organische Gläser, mit einer duroplastischen und transparenten Oberfläche überzogen werden, die dann im nasschemischen Verfahren mit der selbstreinigenden Beschichtung nach der Erfindung überzogen werden.

So können auch selbsthaftende Folien erzeugt werden, die auf der einen Seite kleben und auf der anderen Seite die selbstreinigende Beschichtung nach der Erfindung haben und mit denen man beispielsweise Fassaden, Fenster, Autogläser, Autokunststoffteile oder ähnliches bekleben kann.

Genauso gut kann man die Kunststoffteile von Autos, Gebäuden, Anzeigetafeln, Verkehrsschildern und sonstigen Teilen im Außenbereich gleich bei der Herstellung mit einer Titandioxid-Beschichtung nach der Erfindung ausstatten, so dass ein selbstreinigender Effekt unter Bestrahlung resultiert.

Nach einer vorteilhaften Ausgestaltung der Erfindung ist die Titandioxid-Suspension eine handelsüblich erhältliche Suspension, beispielsweise die VP-Dispersion W740X der Firma Degussa oder die Hombikat TiO2 -Dispersionen der Firma Sachtleben.

Nach einer vorteilhaften Ausgestaltung der Erfindung ist die Beschichtung transparent.

Nach einer vorteilhaften Ausgestaltung des Verfahrens wird bei 50°C bis 150°C verfestigt. Dabei kann die Beschichtung im Zeitraum zwischen 30 Minuten und 5 Stunden getempert werden. Die Erfindung zeichnet sich dadurch aus, dass sich die TiO₂-Partikel der Beschichtung in hoher Konzentration nur an der Oberfläche der Kunststoffmatrix befinden. Dies ermöglicht auf der einen Seite einen sehr hohen Reinigungseffekt und auf der anderen Seite den Schutz der Harzmatrix durch UV-Absorption in der TiO₂-Schicht (UV-Sperre). Die Schädigung der unteren Schicht wird durch die TiO₂-Partikelschicht verhindert. Eine separate Schutzschicht für Lacke wird dadurch überflüssig.

Im Folgenden wird die Erfindung noch anhand einiger Tests, die mit der Beschichtung durchgeführt wurden, näher erläutert:
Zunächst wurden Substrate (PMMA-Platten) mit einem PU-Lack beschichtet. Der PU-Lack wurde anschließend bei Raumtemperatur kurz (30 min) getrocknet. Die Titandioxid-Dispersion wurde anschließend auf den noch nicht vollständig ausgehärteten PU-Lack durch Tauchen appliziert und sodann bei 100°C gehärtet. Als Vergleichsprobe diente ein Substrat mit vollständig gehärtetem PU-Lack. Auf die so vorbereiteten Proben wurde dann eine dünne Schicht Stearinsäureethylester aufgetragen, um einen Schmutzfilm zu simulieren.

Danach wurden die Proben 30 Minuten unter einer UV-Lampe gelagert. Durch die UV-Wirkung werden die Stearinsäureethylesterschichten an TiO₂-haltigen Schichten degradiert und komplett abgetragen. Der Effekt wurde mehrmals bestätigt. Die gereinigten Oberflächen sind von den reinen Beschichtungen nicht zu unterscheiden. An den Proben ohne Titandioxid-Schicht findet kein Abbau des Stearinsäureethylesters statt.

Dabei zeigte sich, dass die Proben ohne Titandioxid-Überzug nach der UV-Bestrahlung deutlich vergilben. Proben mit TiO2-Überzug hingegen blieben nahezu unverändert. Dies belegt, dass die TiO₂-Schicht einen UV-Schutz für die darunterliegende Lackoberfläche bietet.

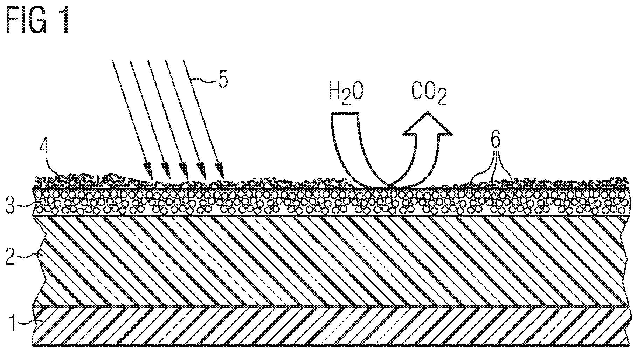

IM Folgenden wird noch eine Figur zu der Erfindung beschrieben, die eine beispielhafte Ausführungsform der Erfindung betreffen:
Die einzige Figur zeigt einen Schichtaufbau mit unten einer Trägerfolie 1, die eben auch ein anorganisches oder ein organisches Glas sein kann, darüber die Kunststoffoberfläche, in dem Fall eine noch nicht vollständig ausgehärtete Polyurethan-Oberfläche 2 auf der in direktem Kontakt die Titandioxid-Nanopartikel der Titandioxid-Beschichtung 3 nach der Erfindung zu liegen kommen. Die aktiven Nanopartikel 6 liegen beispielsweise in einer Größenordnung < 100nm vor, es können aber auch kleinere und/oder größere sowie Mischungen aus verschiedenen Teilchengrößenfraktionen nach der Erfindung vorliegen. Die Teilchen sind relativ gleichmäßig verteilt und haften an dem organischen Netzwerk des Kunststoffs 2, beispielsweise des Duroplasten.

Auf der erfindungsgemäßen Beschichtung 2 ist eine organische Schmutzschicht 4 aufgetragen, die unter UV-Bestrahlung 5 auf der Titandioxid-Oberfläche zersetzt wird. Das frei werdende Wasser und Kohlendioxid wird dabei direkt an die Umgebung abgegeben und kann nicht, wie beim Stand der Technik, wo Titandioxid-Teilchen in die Kunststoffmatrix eingearbeitet wurden, in das Harz eindringen und dieses beschädigen.

Der Ansatz nach der Erfindung zeichnet sich vor allem dadurch aus, dass sich die Titandioxid-Partikel in hoher Konzentration nur an der Oberfläche der Kunststoffmatrix befinden. Dies ermöglicht auf der einen Seite einen sehr hohen Reinigungseffekt und auf der anderen Seite Schutz der Harzmatrix durch UV-Absorption in der TiO₂-Schicht (UV-Sperre). Die Schädigung der unteren Schicht wird durch die Titandioxidpartikelschicht verhindert. Eine Schutzschicht für Lacke ist überflüssig. Diese Methode eignet sich auch gut für das "in mould"-Verfahren.

Die Erfindung betrifft eine Selbstreinigende Oberflächenbeschichtung, die einfach und kostengünstig herstellbar ist, weil sie nur eine einfache Titandioxidschicht umfasst.

## Patentansprüche

1. Photokatalytische Beschichtung, die eine Schicht von Titandioxid-Nanopartikel in einer Kunststoffmatrix umfasst, wobei die Nanopartikel in einem maximalen Teilchendurchmesser von 100 nm vorliegen, die Dicke der Beschichtung kleiner 5 µm beträgt und die Beschichtung transparent ist,
**dadurch gekennzeichnet, dass**
die Titandioxid-Nanopartikel innerhalb der Beschichtung so verteilt sind, dass sich die Titandioxid-Nanopartikel in hoher Konzentration nur an der Oberfläche der Kunststoffmatrix befinden.

2. Photokatalytische Beschichtung nach Anspruch 1, wobei die Kunststoffmatrix ein Duroplast und/oder eine Duroplastmischung ist.

3. Photokatalytische Beschichtung nach einem der Ansprüche 1 oder 2, **dadurch gekennzeichnet, dass** die beiden Seiten der Beschichtung, die oberflächennahe einerseits und die substratnahe andererseits voneinander verschiedene Eigenschaften, insbesondere auch im Hinblick auf die Konzentration an Titandioxid-Partikel, aufweisen.

4. Photokatalytische Beschichtung nach einem der Ansprüche 1 bis 3, die durch Applikation einer Titandioxid-Dispersion in eine noch nicht ausgehärtete Lackbeschichtung herstellbar ist.

5. Photokatalytische Beschichtung nach Anspruch 4, wobei die Applikation der Titandioxid-Dispersion nasschemisch durchführbar ist.

6. Photokatalytische Beschichtung nach einem der Ansprüche 4 oder 5, wobei die Applikation der Titandioxid-Dispersion über Dip-Coating, Rakeln, Sprühen, Schleudern und/oder Fluten durchführbar ist.

7. Verwendung einer Beschichtung nach einem der Ansprüche 1 bis 6 als selbstreinigende Oberflächenbeschichtung.

## Claims

1. Photocatalytic coating which comprises a layer of titanium dioxide nanoparticles in a plastic matrix, wherein the nanoparticles have a maximum particle diameter of 100 nm, the thickness of the coating is less than 5 µm and the coating is transparent,
**characterised in that**
the titanium dioxide nanoparticles are distributed within the coating such that the titanium dioxide nanoparticles are present in high concentration only at the surface of the plastic matrix.

2. Photocatalytic coating according to claim 1, wherein the plastic matrix is a thermosetting composition and/or a thermosetting composition mixture.

3. Photocatalytic coating according to one of claims 1 or 2, **characterised in that** both sides of the coating, the side near the surface on the one hand and the side near the substrate on the other hand, have different properties from one another, in particular also in respect of the concentration of titanium dioxide particles.

4. Photocatalytic coating according to one of claims 1 to 3, which can be manufactured by application of a titanium dioxide dispersion into a paint coating which is not yet fully cured.

5. Photocatalytic coating according to claim 4, wherein the application of the titanium dioxide dispersion can be performed using a wet chemical method.

6. Photocatalytic coating according to one of claims 4 or 5, wherein the application of the titanium dioxide dispersion can be performed using dip coating, doctoring, spraying, centrifugal and/or flow coating.

7. Use of a coating according to one of claims 1 to 6 as a self-cleaning surface coating.

## Revendications

1. Revêtement photocatalytique comprenant une couche de nanoparticules de dioxyde de titane dans une matrice de matière synthétique, les nanoparticules présentant un diamètre de particules maximal de 100 nm, l'épaisseur du revêtement étant inférieure à 5 µm et le revêtement étant transparent,
**caractérisé en ce que**
les nanoparticules de dioxyde de titane sont distribuées à l'intérieur du revêtement de sorte que les nanoparticules de dioxyde de titane se trouvent à une concentration plus élevée seulement à la surface de la matrice de matière synthétique.

2. Revêtement photocatalytique selon la revendication 1, la matrice de matière synthétique étant un Duroplast et/ou un mélange de Duroplast.

3. Revêtement photocatalytique selon l'une des revendications 1 ou 2, **caractérisé en ce que** les deux côtés du revêtement, qui présentent d'une part près de la surface et d'autre part près du substrat des propriétés différentes l'une de l'autre, en particulier également sur le plan de la concentration en particules de dioxyde de titane.

4. Revêtement photocatalytique selon l'une des revendications 1 à 3, qu'on peut fabriquer par application d'une dispersion de dioxyde de titane dans un revêtement de peinture non encore durci.

5. Revêtement photocatalytique selon la revendication 4, l'application de la dispersion de dioxyde de titane pouvant se faire par voie chimique humide.

6. Revêtement photocatalytique selon l'une des revendications 4 ou 5, l'application de la dispersion de dioxyde de titane pouvant se faire par revêtement au trempé, raclage, pulvérisation, centrifugation et/ou arrosage.

7. Utilisation d'un revêtement selon l'une des revendications 1 à 6 comme revêtement superficiel autonettoyant.
